# EUROPEAN PATENT SPECIFICATION

(11) **EP 4 146 603 B1**
(45) Date of publication and mention of the grant of the patent: **04.10.2023**
(21) Application number: 21721922.9
(22) Date of filing: 29.04.2021
(51) Int. Cl.: C02F 1/52, C02F 1/56, C02F 103/00

(54) **COMPOSITION**
ZUSAMMENSETZUNG
COMPOSITION

(30) Priority: 04.05.2020 IN 202021018884; 16.06.2020 EP 20180143
(43) Date of publication of application: 15.03.2023
(73) Proprietor: Unilever IP Holdings B.V., 3013 AL Rotterdam (NL); Unilever Global IP Limited, Wirral, Merseyside CH62 4ZD (GB)
(72) Inventor: RAJENDIRAN, Ganesan, Bangalore 560 066 Whitefield (IN); SHAH, Bijal, Dharmvirbhai, Bangalore 560 066 Whitefield (IN); PATHAK, Gaurav, Bangalore 560 066 Whitefield (IN)
(74) Representative: Reijns, Tiemen Geert Pieter
(86) International application number: PCT/EP2021/061225
(87) International publication number: WO 2021/224095

(56) References cited:
- WO-A1-2018/189015
- CN-A- 110 182 919

## Description

The present invention relates to a composition for purifying water. In particular, the present invention relates to a composition to purify the water generated in household wash processes for reuse.

WO 2018/189015 discloses a water purification composition comprising: 18-98% wt. by dry weight of the composition of inert particulate filler, and 2-82% wt. by dry weight of the composition of a purification mixture comprising by weight of this mixture: (a)15 to 80% of aluminium chlorohydrate compound of the general formula (AlₙCl₃ₙ₋ₘ(OH)ₘ, having a basicity in the range of 70 to 95 % ;(b) 15 to 80 wt.% of a salt of an organic anionic compound having a molecular weight of not more than 1000 kDa and wherein said organic anionic compound comprises one or more anionic groups selected from carboxylate, sulfonate and sulphate and (c) 5 to 20 wt.% of a non-ionic and/or anionic polymeric flocculant, having a molecular weight of more than 1000 kDa; wherein the molar ratio of the organic anionic compound to the aluminium is at least 0.19.

WO 2018/059846 discloses a water purification composition and to the use of the water purification composition for clarifying greywater, preferably greywater produced by laundry washing. The water purification composition comprises an inorganic flocculant, a surfactant scavenging system and a non-ionic and/or polymeric flocculant having a molecular weight of more than 100 kDa; wherein the surfactant scavenging system comprises a water-soluble divalent sulphate salt and a quaternary ammonium cationic surfactant.

WO 2014/001078 discloses a water purification composition and process for clarification of laundry wash and/or rinse liquor for water saving by re-use. The water purification composition comprises a flocculant, a coagulant, a filler and a cationic surfactant.

CN 110 182 919 discloses a purifying sewage treatment agent composed of 20-30 parts by weight of non-ionic polyacrylamide, 10-30 parts by weight aluminum salt, 10-15 parts by weight ferric chloride, 10-15 parts by weight magnesium sulphate, 15-25 parts by weight of calcium oxide, 10-20 parts by weight of bentonite, 10-25 parts by weight of decolorizing agent, 10-25 parts by weight of adsorbent, 5-10 parts by weight of chitosan, 5-15 parts by weight of sodium hypochlorite, 5-15 parts by weight of sodium aluminate citrate, 5 -100 parts by weight magnesium chloride, 5-50 parts by weight sodium hydrogen phosphate, 1-25 parts by weight ammonia water, 20 -50 parts by weight zeolite 20-50. The sewage treatment agent is suitable for large-scale industrial use.

Despite the prior art there is need for an improved composition for purifying water. In particular the composition should be able to purify water from different sources having different alkalinity level.

Accordingly, and in a first aspect, there is provided a composition for purifying water comprising:
- from 5 to 80% wt. aluminium-based flocculant;
- from 10 to 60% wt. monovalent inorganic salt; and
- from 0.5 to 10% wt. divalent inorganic salt.
wherein the monovalent inorganic salt is selected from sulphate, nitrate and mixture thereof.

A flocculation based approach is one way to purify the water generated in household wash processes and to reuse the purified water.

In a flocculation-based approach, the dirty water is mixed with a flocculant to form flocs. The flocs trap solid particles and other impurities suspended in the water and settle at the bottom of the container. The clean water is separated from the flocs by filtration through a cloth or decanting the supernatant.

The performance of flocculation-based technologies depends on the water, in particular its alkalinity. Water obtained from different sources can have markedly different characteristics and hence it is desirable that a composition for purifying water should work efficiently in all type of waters, in particular those having different alkalinities. One way to achieve this is by incorporating an alkaline source into the composition. However, adding an alkaline source to the composition affects the stability of the composition as the flocculant and the alkalinity source react with each other and degrade the composition over time.

We have surprisingly found that compositions according to the present invention are able to purify water from different sources with varying alkalinity and that these compositions do not degrade over time.

The present invention provides a composition for purifying water, in particular water generated in household wash processes. The composition comprises from 5 to 80% wt. aluminium-based flocculant, from 10 to 60% wt. monovalent inorganic salt, and from 0.5 to 10% wt. divalent inorganic salt, wherein the monovalent inorganic salt is selected from sulphate, nitrate and mixture thereof.

The composition comprises from 5 to 80% wt. aluminium-based flocculant. Preferably the aluminium-based flocculant is aluminium chlorohydrate. Aluminium chlorohydrate is an aluminium salt with general formula AlₙCl₍₃ₙ₋ₘ₎(OH)ₘ. It is an electrolyte flocculant and works efficiently in an alkaline water. However, it fails to flocculate in water having low or no alkalinity.

The composition comprises from 10 to 60% wt. monovalent inorganic salt. The monovalent inorganic salt is selected from sulphate, nitrate and mixture thereof.

Preferably the monovalent inorganic salt is present at from 15 to 55% wt. of the composition. More preferably the monovalent salt is present at from 20 to 50% wt. of the composition.

Preferably the monovalent inorganic salt is a sodium or potassium salt. A preferred monovalent inorganic salt is sodium sulphate.

Aluminium chlorohydrate is acidic in nature and it tends to react with alkaline salts, such as, sodium sulphate during storage and degrades over time. A degraded composition could not purify the water efficiently. In order to prevent this degradation, the composition comprises from 0.5 to 10% wt. divalent inorganic salt.

Preferably the divalent inorganic salt is present at from 1 to 10 % wt. of the composition. More preferably the divalent salt is present at from 2 to 8% wt. and most preferably 3 to 6% wt. of the composition.

Preferably the divalent inorganic salt is a calcium or magnesium salt. Preferably the divalent inorganic salt is a sulphate or nitrate or mixture thereof. Preferably the divalent inorganic salt is magnesium sulphate and/or hydrated salt thereof. Most preferred divalent salt is magnesium sulphate hepta-hydrate.

Preferably the composition according to present invention comprises a polymeric flocculant for increasing the kinetics of settling of the flocs in the purification process. Preferably the polymeric flocculant is present at from 0.5 to 5 % wt. of the composition. More preferably the polymeric flocculant is present at from 1 to 4% wt. and most preferably 1.5 to 3 % wt. of the composition.

Preferably the polymeric flocculant is selected from polyacrylic acid, polyacrylamide and mixtures thereof. A preferred polymeric flocculant is polyacrylamide.

Preferably the composition comprises an inorganic filler. The filler comprises inert particulates with relatively high density. In the purification process, the filler particulates are trapped within the flocs and make the flocs heavier, thereby resulting in faster settling of the flocs. Preferably the density of the inorganic filler is from 1500 to 3500 kg/m³, more preferably, from 1750 to 3500 kg/m³ and most preferably 2000 to 3500 kg/m³.

Preferably the filler is present at from 10 to 80% wt. of the composition. More preferably the filler is present at from 15 to 75% wt. and most preferably from 20 to 70% wt. of the composition.

Preferably the inorganic filler is selected from feldspar, silica, aluminium silicate, calcite, bentonite, clay and mixtures thereof. A preferred inorganic filler is feldspar.

Preferably the composition is in a single dose format. Single dose format includes compositions stored and packaged in sachets as well as those contained in dissolvable films such as polyvinyl alcohol and which dissolve when placed in water. Single dose format also includes a tablet, which dissolves in contact with water and releases the composition.

Accordingly, and in a second aspect, there is provided a method for purifying water containing suspended solids comprising, taking a composition according to the first aspect, dosing 0.1 to 3 gram per litre of the composition into the water and stirring to form flocs in the water, allowing the flocs to settle at the bottom of the container and subsequently separating the flocs from the clean water. Preferably the water and the composition mix are stirred for 5 to 120 seconds, more preferably, for 10 to 90 seconds and most preferably for 15 to 60 seconds. Preferably the mix is stirred with hand or using an applicator, such as, spoon, glass rod, stick etc. Different patterns of stirring may be applied, such as, stirring-pause-stirring or stirring-pause or variation thereof.

The flocs may be separated by filtering through a woven cloth or by decanting the clean water.

### EXAMPLES:

The following are formulations for purifying water:

**Table 1**

| **Ingredients** | **Formulation A (%w/w)** | **Formulation 1 (%w/w)** |
|---|---|---|
| Aluminium chlorohydrate | 14 | 14 |
| Sodium sulphate | 50 | 50 |
| Polyacrylamide | 2 | 2 |
| Fragrance | 0.5 | 0.5 |
| Feldspar | 33.5 | 28.5 |
| Magnesium sulphate hepta-hydrate | 0 | 5 |

Formulation 1 is a formulation according to the present invention while formulation A is a comparative.

Method for making and storing the formulations:
Except the perfume, all ingredients were taken as dry powder and sieved to less than 500 microns. The dry ingredients were mixed as per table 1 in a pan granulator or ribbon blender for couple of minutes. The perfume was sprayed onto the dry mix and mixed homogenously with it.

Each formulation was packed in a 20 micron PET (polyethylene terephthalate) pouch and stored in different conditions.

### Test method:

Formulations were tested in a model system. The model system was prepared by dispersing 0.2 gm/litre of a model soil containing 50% wt. mud and 50% kaolin in a bucket of clean water. The particle size of the model soil was less than 180 microns.

Each formulation was added to the model system and stirred for 20 seconds and waited for 20 seconds and subsequently stirred for another 20 seconds. The turbidity of treated water was measured after 3 minutes of stirring using Merck Turbidity meter. and expressed in Nephelometric Turbidity Unit (NTU). Lower turbidity of treated water indicates better performance of the water purifying composition.

Evaluation of efficacies of the formulations after 8 weeks storage under different conditions:

**Table 2**

| | **Turbidity of treated water (NTU)** | |
|---|---|---|
| **Storage Conditions** | **Formulation A** | **Formulation 1** |
| Hot & Humid (40°C and 45% relative humidity) | 40 | 6 |
| Hot & Dry (40°C and 85% relative humidity) | 35 | 6 |

Data shows that formulation 1 performs significantly better compared to formulation A.

## Claims

1. A composition for purifying water comprising:
- from 5 to 80% wt. aluminium-based flocculant;
- from 10 to 60% wt. monovalent inorganic salt; and
- from 0.5 to 10% wt. divalent inorganic salt,
wherein the monovalent inorganic salt is selected from sulphate, nitrate and mixture thereof.

2. A composition according to claim 1 wherein the aluminium-based flocculant is aluminium chlorohydrate.

3. A composition according to claim 1 or 2 wherein the monovalent inorganic salt is a sodium or potassium salt.

4. A composition according to any preceding claim wherein the divalent inorganic salt is a calcium or magnesium salt.

5. A composition according to any preceding claim wherein the divalent inorganic salt is selected from sulphate, nitrate and mixture thereof.

6. A composition according to any preceding claim wherein the divalent inorganic salt is magnesium sulphate hepta-hydrate.

7. A composition according to any preceding claim comprising a polymeric flocculant.

8. A composition according to claim 7 wherein the polymeric flocculant is present at from 0.5 to 5 % wt. of the composition.

9. A composition according to claim 7 or 8 wherein the polymeric flocculant is selected from polyacrylic acid, polyacrylamide and mixtures thereof.

10. A composition according to any preceding claim wherein the composition comprises an inorganic filler.

11. A composition according to claim 10 wherein the inorganic filler is selected from feldspar, silica, aluminium silicate and mixtures thereof.

12. A composition according to claim 10 the inorganic filler is feldspar.

13. A composition according to any preceding claim in a single dose format.

14. A method for purifying water containing suspended solids comprising, taking a composition according to any one of the claims 1 to 13, dosing 0.1 to 3 gm per litre of the composition into the water and stirring to form flocs in the water, allowing the flocs to settle at the bottom of the container and subsequently separating the flocs from the water.

## Patentansprüche

1. Zusammensetzung zur Reinigung von Wasser, umfassend:
- 5 bis 80 Gew.-% Flockungsmittel auf Aluminiumbasis;
- 10 bis 60 Gew.-% einwertiges anorganisches Salz; und
- 0,5 bis 10 Gew.-% zweiwertiges anorganisches Salz,
wobei das einwertige anorganische Salz aus Sulfat, Nitrat und Mischungen davon ausgewählt ist.

2. Zusammensetzung nach Anspruch 1, wobei das Flockungsmittel auf Aluminiumbasis Aluminiumchlorhydrat ist.

3. Zusammensetzung nach Anspruch 1 oder 2, wobei das einwertige anorganische Salz ein Natrium- oder Kaliumsalz ist.

4. Zusammensetzung nach einem vorhergehenden Anspruch, wobei das zweiwertige anorganische Salz ein Calcium- oder Magnesiumsalz ist.

5. Zusammensetzung nach einem vorhergehenden Anspruch, wobei das zweiwertige anorganische Salz aus Sulfat, Nitrat und Mischungen davon ausgewählt ist.

6. Zusammensetzung nach einem vorhergehenden Anspruch, wobei das zweiwertige anorganische Salz Magnesiumsulfat-Heptahydrat ist.

7. Zusammensetzung nach einem vorhergehenden Anspruch, umfassend ein polymeres Flockungsmittel.

8. Zusammensetzung nach Anspruch 7, wobei das polymere Flockungsmittel in einer Menge von 0,5 bis 5 Gew.-% der Zusammensetzung vorliegt.

9. Zusammensetzung nach Anspruch 7 oder 8, wobei das polymere Flockungsmittel aus Polyacrylsäure, Polyacrylamid und Mischungen davon ausgewählt ist.

10. Zusammensetzung nach einem vorhergehenden Anspruch, wobei die Zusammensetzung einen anorganischen Füllstoff umfasst.

11. Zusammensetzung nach Anspruch 10, wobei der anorganische Füllstoff aus Feldspat, Siliziumdioxid, Aluminiumsilikat und Mischungen davon ausgewählt ist.

12. Zusammensetzung nach Anspruch 10, wobei der anorganische Füllstoff Feldspat ist.

13. Zusammensetzung nach einem vorhergehenden Anspruch in einem Einzeldosisformat.

14. Verfahren zur Reinigung von Wasser, das suspendierte Feststoffe enthält, umfassend die Aufnahme einer Zusammensetzung nach irgendeinem der Ansprüche 1 bis 13, Dosieren von 0,1 bis 3 g pro Liter der Zusammensetzung in das Wasser und Rühren, um im Wasser Flocken zu bilden, wobei sich die Flocken am Boden des Behälters absetzen können, und anschließend Abtrennen der Flocken vom Wasser.

## Revendications

1. Composition pour la purification d'eau comprenant :
- de 5 à 80 % en masse de floculant à base d'aluminium ;
- de 10 à 60 % en masse de sel inorganique monovalent ; et
- de 0,5 à 10 % en masse de sel inorganique divalent, dans laquelle le sel inorganique monovalent est choisi parmi un sulfate, nitrate et mélange de ceux-ci.

2. Composition selon la revendication 1, dans laquelle le floculant à base d'aluminium est le chlorohydrate d'aluminium.

3. Composition selon la revendication 1 ou 2, dans laquelle le sel inorganique monovalent est un sel de sodium ou de potassium.

4. Composition selon l'une quelconque des revendications précédentes, dans laquelle le sel inorganique divalent est un sel de calcium ou magnésium.

5. Composition selon l'une quelconque des revendications précédentes, dans laquelle le sel inorganique divalent est choisi parmi un sulfate, nitrate et mélange de ceux-ci.

6. Composition selon l'une quelconque des revendications précédentes, dans laquelle le sel inorganique divalent est l'hepta-hydrate de sulfate de magnésium.

7. Composition selon l'une quelconque des revendications précédentes comprenant un floculant polymère.

8. Composition selon la revendication 7, dans laquelle le floculant polymère est présent à de 0,5 à 5 % en masse de la composition.

9. Composition selon la revendication 7 ou 8, dans laquelle le floculant polymère est choisi parmi le poly(acide acrylique), polyacrylamide et des mélanges de ceux-ci.

10. Composition selon l'une quelconque des revendications précédentes, dans laquelle la composition comprend une charge inorganique.

11. Composition selon la revendication 10, dans laquelle la charge inorganique est choisie parmi le feldspar, la silice, le silicate d'aluminium et des mélanges de ceux-ci.

12. Composition selon la revendication 10, dans laquelle la charge inorganique est le feldspar.

13. Composition selon l'une quelconque des revendications précédentes dans un format de dose unitaire.

14. Procédé de purification d'eau contenant des solides en suspension comprenant, la prise d'une composition selon l'une quelconque des revendications 1 à 13, le dosage de 0,1 à 3 g par litre de la composition dans l'eau et l'agitation pour former des flocons dans l'eau, le laisser les flocons se déposer au fond du récipient et ensuite la séparation des flocons de l'eau.
